# EUROPÄISCHE PATENTSCHRIFT

(11) **EP 1 817 126 B1**
(45) Veröffentlichungstag und Bekanntmachung des Hinweises auf die Patenterteilung: **20.06.2012**
(21) Anmeldenummer: 05793507.4
(22) Anmeldetag: 14.10.2005
(51) Int. Cl.: B23B 31/28, B23B 31/26

(54) **SPANNVORRICHTUNG**
CLAMPING DEVICE
DISPOSITIF DE SERRAGE

(30) Priorität: 20.10.2004 DE 102004051031
(43) Veröffentlichungstag der Anmeldung: 15.08.2007
(73) Patentinhaber: OTT-JAKOB GmbH & Co. Spanntechnik KG, 87663 Lengenwang (DE)
(72) Erfinder: GREIF, Josef, 87654 Friesenried (DE); BECHTELER, Wolfgang, 87640 Ebenhofen (DE)
(74) Vertreter: Schwarz, Thomas
(86) Internationale Anmeldenummer: PCT/EP2005/011052
(87) Internationale Veröffentlichungsnummer: WO 2006/042700

(56) Entgegenhaltungen:
- DE-A1- 2 107 444
- DE-A1- 4 123 834
- DE-A1- 10 160 705
- PATENT ABSTRACTS OF JAPAN Bd. 018, Nr. 302 (M-1618), 9. Juni 1994 (1994-06-09) -& JP 06 063806 A (OSAKA KIKO CO LTD), 8. März 1994 (1994-03-08)

## Beschreibung

Die Erfindung betrifft eine Spannvorrichtung zum Spannen eines Werkzeugs oder Werkzeughalters in einer Arbeitsspindel, insbesondere einer Werkzeugmaschine, nach dem Oberbegriff des Anspruchs 1.

Eine derartige Spannvorrichtung ist aus der DE 41 23 834 A1 bekannt. Dort besteht das Lineargetriebe zur Umwandlung der Drehbewegung eines Motors in eine Linearbewegung zur Verschiebung der Zugstange aus einer axial verschiebbaren und gegen Verdrehung gesicherten Spindelhülse, die mit Hilfe eines zur Spindel seitlich versetzten Verschiebeantriebs axial verschoben wird. Der Verschiebeantrieb enthält eine durch den Motor drehbare Gewindespindel, die mit einer Spindelmutter in einem seitlichen Arm der Spindelhülse zur deren Verschiebung zusammenwirkt.

Aus der DE 101 160 705 A1 ist eine Vorrichtung zur Befestigung eines Werkzeugs an einer Welle mit einer in der Welle axial verschiebbaren Zugstange bekannt, bei der auf einem Außengewinde der Zugstange ein Gewindekörper mit einem korrespondierenden Innengewinde angebracht ist und die Zugstange zum Werkzeugwechsel durch Drehung des Gewindekörpers innerhalb der Welle axial verschiebbar ist.

In der JP 6-63806 A ist eine Spannvorrichtung mit einem in einer Arbeitsspindel angeordneten und über eine Zugstange entgegen der Kraft einer Federanordnung in eine Lösestellung bewegbaren Spannsatz bekannt. Die Verschiebung der Zugstange zur Bewegung des Spannsatzes in die Lösestellung erfolgt hier über einen Nockenantrieb, durch den die Drehbewegung eines rechtwinklig zur Zugstange angeordneten Motors in eine Linearbewegung der Zugstange umgewandelt wird.

Aufgabe der Erfindung ist es, eine Spannvorrichtung der eingangs genannten Art zu schaffen, die eine vereinfachte Betätigung ermöglicht.

Diese Aufgabe wird durch eine Spannvorrichtung mit den Merkmalen des Anspruchs 1 gelöst. Zweckmäßige Weiterbildungen und vorteilhafte Ausgestaltungen der Erfindung sind in den Unteransprüchen angegeben.

Bei der erfindungsgemäßen Spannvorrichtung ist das Lineargetriebe als Gewindetrieb mit einer durch einen Motor drehbaren, zur Zugstange koaxialen Spindelhülse und einer zugehörigen Gewindespindel ausgeführte.

Bei dem Antriebsmotor kann es sich um einen gesonderten Motor handeln, dessen Stator und Rotor in einem Gehäuse der Löseeinheit untergebracht sind. In einer weiteren vorteilhaften Ausführungsform der Erfindung kann der für die Drehung der Arbeitsspindel vorgesehene Antriebsmotor zum Antrieb des Lineargetriebes verwendet werden. Hier kann eine schaltbare Kupplung vorgesehen werden, durch welche die Antriebsspindel zur Durchführung eines Werkzeugwechsels mit dem Lineargetriebe verbindbar ist.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Antriebseinheit einer Werkzeugmaschine mit einer Spannvorrichtung in einem Längsschnitt;
- **Figur 2**: einen vergrößerten Längsschnitt einer Löseeinheit der in Figur 1 gezeigten Spannvorrichtung in einer Lösestellung;
- **Figur 3**: einen vergrößerten Längsschnitt einer Löseeinheit der in Figur 1 gezeigten Spannvorrichtung in einer Spannstellung;
- **Figur 4**: einen vergrößerten Längsschnitt einer weiteren Löseeinheit in einer Lösestellung und

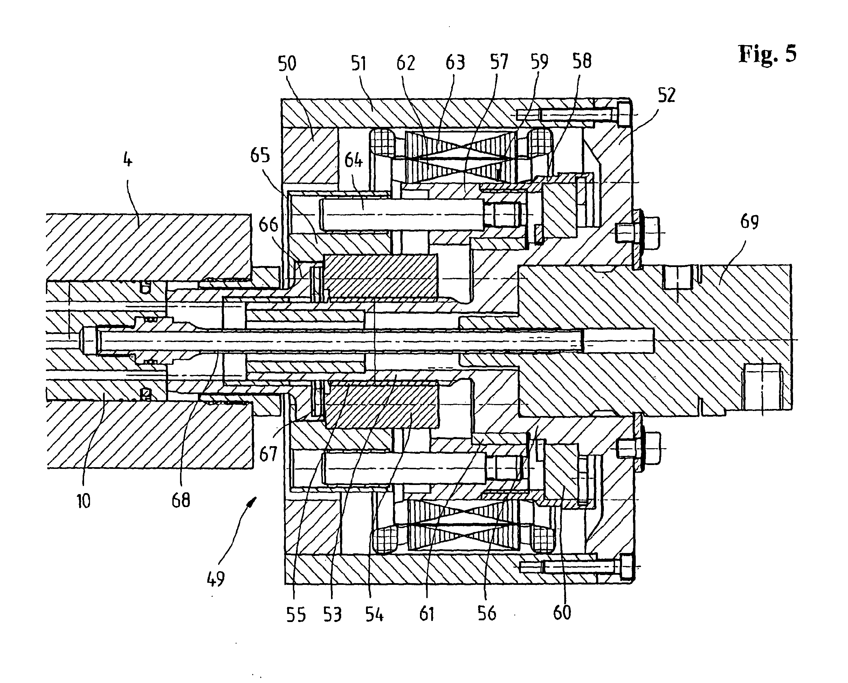

- **Figur 5**: einen vergrößerten Längsschnitt der in Figur 4 gezeigten Löseeinheit in einer Spannstellung;

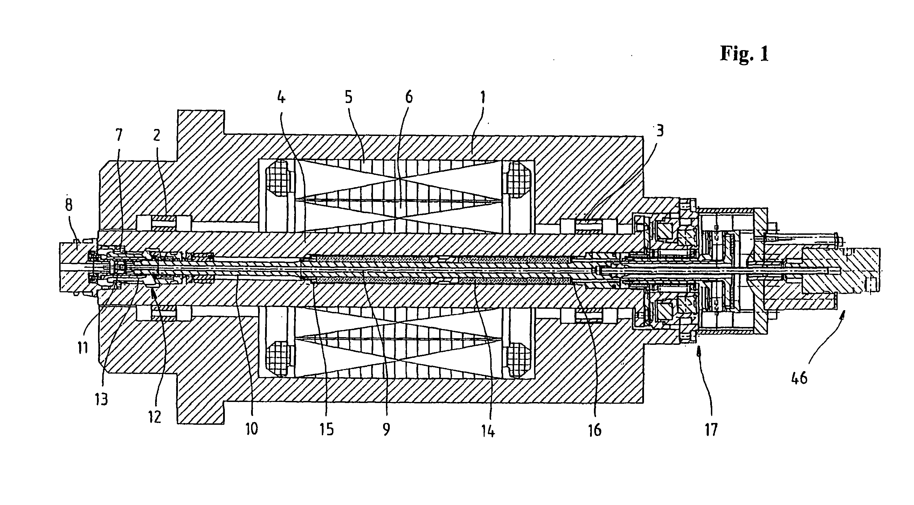

In Figur 1 ist eine als Motorspindel ausgeführte Antriebseinheit einer Werkzeugmaschine mit einem Spindelgehäuse 1, einer innerhalb des Spindelgehäuses 1 über Lager 2 und 3 drehbar gelagerten Arbeitsspindel 4, einem im Spindelgehäuse 1 angeordneten Stator 5 und einem um die Arbeitsspindel 4 konzentrisch angeordneten und mit dieser drehfest verbundenen Rotor 6 im Längsschnitt gezeigt. Der durch den Stator 5 und den Rotor 6 gebildete Antriebsmotor ist derart ausgelegt, dass die Arbeitsspindel 4 sowohl mit hohen Drehzahlen als auch mit einer geringen Drehzahl und hoher Positioniergenauigkeit angetrieben werden kann. Die Arbeitsspindel 4 weist an ihrem in Figur 1 linken vorderen Ende einen Innenkegel 7 für die Aufnahme eines Werkzeugkegels 8 an einem Werkzeug oder Werkzeughalter auf. Bei der gezeigten Ausführung ist der Werkzeugkegel 8 als Hohlschaftkegel ausgeführt. In der Arbeitsspindel 4 ist eine Spannvorrichtung zum Spannen eines Werkzeugs bzw. Werkzeughalters integriert.

Die Spannvorrichtung enthält eine innerhalb der Arbeitsspindel 4 zu deren Mittelachse 9 konzentrische Zugstange 10, an deren vorderen Ende ein Spannkegel 11 eines an sich bekannten Spannsatzes 12 befestigt ist. Der Spannsatz 12 enthält eine um den Spannkegel 11 angeordnete Spannzange mit mehreren Zangenelementen 13, die durch axiale Verschiebung des Spannkegels 11 zur Klemmung bzw. Freigabe des Werkzeugkegels 8 radial beweglich sind. Die Zugstange 10 wird durch eine um diese konzentrisch angeordnete Federanordnung 14 nach hinten vorgespannt. Die hier als Tellerfederpaket ausgeführte Federanordnung 14 ist an der einen Seite an einer innerhalb der Arbeitsspindel 4 abgestützten Anlagescheibe 15 und an der anderen Seite an einem am hinteren Ende der Zugstange 10 befindlichen Bund 16 abgestützt. Die Zugstange 10 ist für die Zuführung eines Arbeitsfluids zum Werkzeugkegel 8 hohl ausgeführt. An dem hinteren Ende der Zugstange 10 ist eine - im Folgenden noch näher erläuterte - elektrisch betätigbare Löseeinheit 17 angeordnet, durch welche die Zugstange 10 entgegen der Kraft der Federanordnung 14 nach vorne gedrückt werden kann. Wenn die Zugstange 10 nach vorne gedrückt wird, gibt der am vorderen Ende der Arbeitsspindel 4 angeordnete Spannsatz 12 den Werkzeugkegel 8 des Werkzeugs bzw. Werkzeughalters frei. Wird dagegen die Zugstange 10 durch die Kraft der Federanordnung 14 wieder nach hinten gezogen, wird der Werkzeugkegel 8 in die Arbeitsspindel 4 eingezogen und geklemmt. Der Aufbau und die Funktionsweise des Spannsatzes 12 sind als solche bekannt, so dass hier auf die ausführliche Beschreibung verzichtet werden kann.

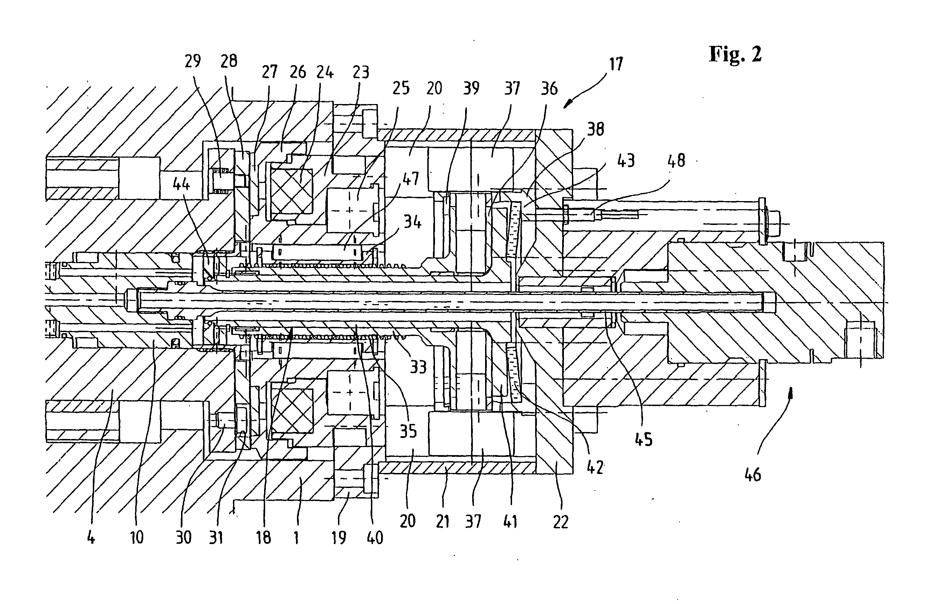

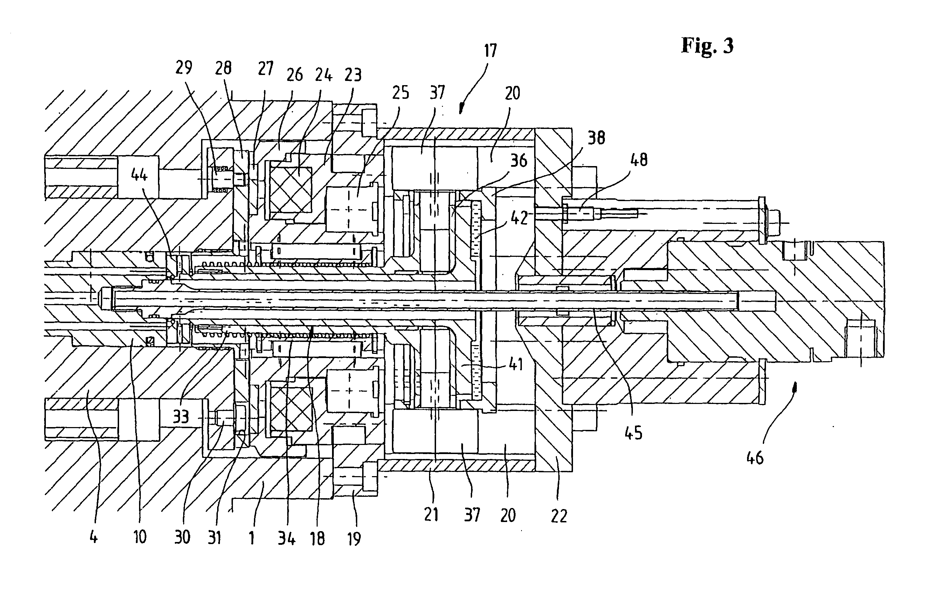

In den Figuren 2 und 3 ist ein vergrößerter Längsschnitt der Löseeinheit 17 an der in Figur 1 dargestellten Antriebseinheit in einer Spannstellung bzw, einer Lösestellung gezeigt. Die Löseeinheit 17 enthält einen axial verschiebbaren Kolben 18, der zur Betätigung der Zugstange 10 durch die motorisch drehbare Arbeitsspindel 4 über eine schaltbare Kupplung und ein Lineargetriebe axial verschiebbar innerhalb eines mit dem Spindelgehäuse 1 drehfest verbundenen Gehäuses angeordnet ist. Das Gehäuse umfasst ein vorderes Gehäuseteil 19 mit Stützflächen 20, ein Abdeckrohr 21 und ein hinteres Gehäuseteil 22. Das vordere Gehäuseteil 19 ist über einen Ringflansch mit dem Spindelgehäuse 1 verschraubt. Durch den axial verschiebbaren Kolben 18 ist die Zugstange 10 entgegen der Kraft der Federanordnung 14 verschiebbar.

Die schaltbare Kupplung enthält einen innerhalb des vorderen Gehäuseteils 19 drehfest angeordneten Spulenkörper 23, in dem eine Spule 24 angeordnet ist. Die schaltbare Kupplung enthält ferner ein innerhalb des Spulenkörpers 23 über ein Lager 25 drehbar gelagertes Ankerteil 26, das an einer vorderen Stirnfläche einen Reibbelag 27 zum Eingriff mit einem an der hinteren Stirnseite der Arbeitsspindel 4 angeordneten Reibring 28 aufweist. Der Reibring 28 wird über mehrere federbelastete Zugbolzen 29 axial an die hintere Stirnseite der Arbeitsspindel 4 angezogen. Über mehrere Schrauben 30 und entsprechende Mitnahmebohrungen 31 ist der Reibring 28 gegen Verdrehung gesichert, jedoch axial beweglich mit der Arbeitsspindel 4 verbunden.

Das Lineargetriebe ist bei der gezeigten Ausführung als Gewindetrieb mit einer hohlen Gewindespindel 33 und einer zugehörigen Spindelhülse 34 ausgeführt, die über ein z.B. als Trapezgewinde ausgeführtes Bewegungsgewinde 35 miteinander verbunden sind. Die Spindelhülse 34 ist über Passfedern 47 formschlüssig und axial gesichert mit dem drehbaren Ankerteil 26 verbunden. Die Gewindespindel 33 enthält einen im Durchmesser vergrößerten hinteren Stützabschnitt 36, in dem radial vorstehende Stützkörper 37 angeordnet sind. Bei der gezeigten Ausführung sind die Stützkörper 37 als drehbar gelagerte Stützrollen ausgeführt. Über diese Stützkörper 37 ist die Gewindespindel 33 auf den Stützflächen 20 des stationären vorderen Gehäuseteils 19 axial beweglich, jedoch gegen Verdrehung gesichert angestützt. Der hintere Stützabschnitt 36 der Gewindespindel 33 ist in einer Hülse 38 angeordnet und in dieser durch einen Spannring 39 axial gesichert. Der Kolben 18 enthält ein durch die hohle Gewindespindel 33 verlaufendes Rohr 40 und einen tellerförmigen hinteren Teil 41, der sich mit der einen Stirnseite an der Rückseite des Stützabschnitts 36 und mit der anderen Stirnseite über eine Tellerfeder 42 oder eine andere Feder an einem. Bund 43 der Hülse 38 abstützt, Über die Hülse 38 wird der Kolben 18 so von der Gewindespindel 33 bei deren Axialbewegung mitgenommen. Am vorderen Ende des Kolbens 18 ist ein Axiallager 44 befestigt, dessen drehbarer Lagerring beim Lösen der Spannvorrichtung in Kontakt mit dem hinteren Ende der Zugstange 10 gelangt. Durch den hohlen Kolben 18 verläuft ein Verbindungsrohr 45, über welches die hohl ausgeführte Zugstange 10 für die Zuführung von Schmiermittel oder Druckluft mit einer an sich bekannten Drehdurchführung 46 verbunden ist.

Im Folgenden wird die Funktionsweise der vorstehend beschriebenen Spannvorrichtung erläutert:
Zur Durchführung eines Werkzeugwechsels wird in der gemäß Figur 2 dargestellten Spannstellung zunächst die Spule 24 bei stehender Arbeitsspindel 4 bestromt, so dass der Reibring 28 entgegen der Kraft der federbelasteten Zugbolzen 29 zur Spule 24 hin angezogen und an den Reibbelag 27 angedrückt wird. Dann wird die Arbeitsspindel 4 durch entsprechende Ansteuerung des Antriebmotors mit geringer Drehzahl gedreht, wobei der Ankerteil 26 und die mit diesem drehfest verbundene Spindelhülse 34 über die eingedrückte Kupplung mitgedreht wird. Da die innerhalb der Spindelhülse 34 angeordnete Gewindespindel 33 über die Stützkörper 37 gegen Verdrehung gesichert ist, führt sie durch die Drehung der ebenfalls axial gesicherten Spindelhülse 34 eine Axialbewegung aus. Dabei nimmt sie über die Hülse 38 den Kolben 18 mit. Zum Lösen der Spannvorrichtung wird die Spindelhülse 34 so gedreht, dass sich die Gewindespindel 34 und der Kolben 18 in Richtung der Zugstange 10 bewegen und diese in eine in Figur 3 dargestellte vordere Lösestellung verschieben. Über das an der vorderen Stirnseite des Kolbens 10 angeordnete Axiallager 44 wird die Reibung zwischen der sich nicht drehenden Gewindespindel 33 und der rotierenden Zugstange 10 bei deren Kontakt verringert. Die zwischen dem hinteren Ende 41 des Kolbens 18 und dem Bund 43 der Hülse 38 eingespannte Tellerfeder 42 sorgt für eine Abfederung des Kolbens 18, wenn die Zugstange 10 in der vorderen Lösestellung gegen einen festen vorderen Anschlag fährt und sich die Arbeitsspindel trotz abgeschaltetem Motor noch etwas weiterdreht. Dadurch können eventuelle Stöße beim Verfahren in die Lösestellung gedämpft und abgefedert werden.

Zum Spannen der Spannvorrichtung kann dann die Drehrichtung des Motors wieder umgekehrt werden, so dass der Kolben 18 wieder in die gemäß Figur 2 gezeigte hintere Stellung verfährt. Über die Federanordnung 14 wird die Zugstange 10 dabei wieder in die hintere Spannstellung gedrückt. An dem hinteren Gehäuseteil 22 ist ein Endschalter 48 angebracht, durch den der Motor abgeschaltet wird, wenn die Hülse 38 ihre hintere Endstellung erreicht. Auch hier dient die Feder 42 wieder als Dämpfungselement, wenn die Hülse 38 beim Zurückfahren zur Anlage an den hinteren Gehäuseteil 22 gelangt und sich die Arbeitsspindel 4 trotz abgeschaltetem Motor aufgrund ihrer Trägheit noch etwas weiterdreht.

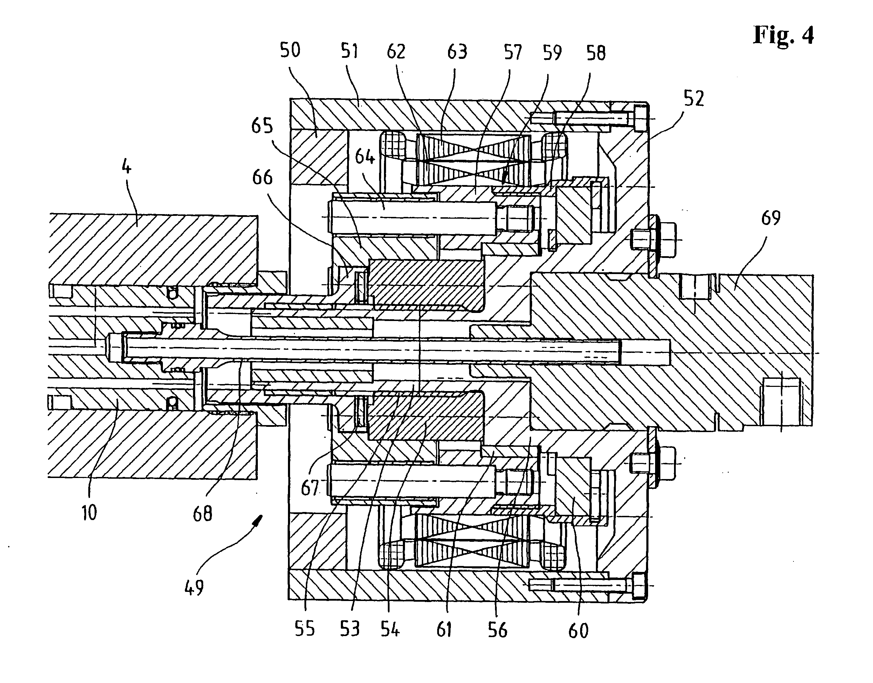

In Figur 4 ist ein weiteres Ausführungsbeispiel einer elektrisch betätigbaren Löseeinheit 49 zur Verschiebung der Zugstange 10 einer in der Arbeitsspindel 4 einer Werkzeugmaschine integrierten Spannvorrichtung gezeigt. Die Löseeinheit 49 enthält ein stationäres Gehäuse mit einem ringförmige vorderen Gehäuseteil 50, einem mit diesem fest verbundenen Abdeckrohr 51 und einem mit dem Abdeckrohr 51 verschraubten hinteren Gehäuseteil 52. Das hintere Gehäuseteil 52 hat eine nach vorne vorstehende Gewindespindel 53, auf der eine Spindelhülse 54 über ein z.B. als Trapezgewinde ausgeführtes Bewegungsgewinde 55 drehbar angeordnet ist. Auf einem Lagerabsatz 56 des hinteren Gehäuseteils 52 ist eine aus einem vorderen Teil 57 und einem hinteren Teil 58 zusammengesetzte Antriebsbuchse 59 über ein hinters Lager 60 und eine vordere Lagerbuchse 61 drehbar angeordnet.

Die Antriebsbuchse 59 kann durch einen Motor mit einem um die Antriebsbuchse 59 konzentrisch angeordneten und mit dieser drehfest verbunden Rotor 62 und einem diesen konzentrisch umgebenden Stator 63 angetrieben werden. Der Stator 63 ist fest innerhalb des Gehäuses untergebracht und umgibt konzentrisch den auf der Antriebsbuchse 59 angeordneten Rotor 62. In dem vorderen Teil der Antriebsbuchse 59 sind mehrere nach vorne vorstehende Übertragungsstifte 64 befestigt. Auf die Übertragungsstifte 64 ist ein mit entsprechenden Bohrungen versehener Übertragungsring 65 axial verschiebbar aufgesteckt. In dem Übertragungsring 65 ist die Spindelhülse 54 verdrehfest fixiert. In dem Übertragungsring 65 ist ferner ein hohler Kolben 66 angeordnet, der an seiner hinteren Stirnseite über ein Axiallager 67 an der vorderen Stirnseite der Spindelhülse 54 drehbar abgestützt ist und mit seiner vorderen Stirnseite beim Lösen der Spannvorrichtung mit der hinteren Stirnseite der Zugstange 10 in Kontakt gelangt. Durch das hohl ausgeführte Gehäuseteil 52 und den hohlen Kolben 66 verläuft ebenfalls ein Verbindungsrohr 68, durch welches die Zugstange 10 für die Zuführung eines Kühl-oder Schmiermittels mit einer Drehdurchführung 69 verbunden ist. Auch bei dieser Ausführung ist das Lineargetriebe zur Umwandlung der Drehbewegung des Motors in eine Linearbewegung als Gewindetrieb mit einer angetriebenen Spindelhülse 54 und einer dazugehörigen Gewindespindel 53 ausgeführt. Im Gegensatz zur ersten Ausführung steht hier jedoch die Gewindespindel 53 fest und die angetriebene Spindelhülse 54 ist in Axialrichtung beweglich. Wenn die Spindelhülse 54 durch den Motor über die Antriebsbuchse 59 und den Übertragungsring 65 angetrieben wird, führt der Ubertragungsring 65 mit dem darin angeordneten Kolben 66 eine Axialbewegung durch.

Die erfindungsgemäße Spannvorrichtung ist nicht auf die vorstehend beschriebenen Ausführungsbeispiele beschränkt. So kann das erfindungsgemäße Spannsystem nicht nur bei Hohlkegelspannsystemen, sondern auch bei Steilkegelspannsystemen zum Einsatz gelangen. Der Spannsatz kann sowohl zur Halterung von Werkzeugen mit Hohlschaftkegel (HSK) als auch Halterung von Werkzeugen mit Steilkegel (SK) in Art einer Spannzange oder dgl. ausgeführt sein. Außerdem kann auch ein elektrischer Linearantrieb zur Betätigung der Löseeinheit zum Einsatz gelangen.

## Patentansprüche

1. Spannvorrichtung zum Spannen eines Werkzeugs (8) oder Werkzeughalters in einer Arbeitsspindel (4), insbesondere einer Werkzeugmaschine, mit einer innerhalb der Arbeitsspindel (4) verschiebbar angeordneten Zugstange (10), einem in der Arbeitsspindel (4) angeordneten und über die Zugstange (10) zwischen einer Spannstellung und einer Lösestellung bewegbaren Spannsatz (12), einer der Zugstange (10) zugeordneten Federanordnung (14) zur Erzeugung der Einzugskraft des Spannsatzes (12) und einer durch einen elektrischen Antrieb (5, 6, 33, 34; 62, 63, 53, 54) betätigbaren Löseeinheit (17; 49), durch welche der Spannsatz (12) über die Zugstange (10) entgegen der Kraft der Federanordnung (14) in die Lösestellung bewegbar ist, wobei der elektrische Antrieb (5, 6, 33, 34; 62, 63, 53, 54) einen Motor (5, 6; 62, 63) und ein als Gewindetrieb ausgeführtes Lineargetriebe (33, 34; 53, 54) zur Umwandlung der Drehbewegung des Motors in eine Linearbewegung zur Verschiebung der Zugstange (10) umfasst, **dadurch gekennzeichnet, dass** das Lineargetriebe (33, 34; 53, 54) eine durch den Motor (5, 6; 62, 63) drehbare, zur Zugstange (10) koaxiale Spindelhülse (34, 54) und eine zugehörige Gewindespindel (33, 53) umfasst.

2. Spannvorrichtung nach Anspruch 1, **dadurch gekennzeichnet, dass** die Spindelhülse (54) durch einen innerhalb eines Gehäuses (50, 51, 52) der Löseeinheit (49) angeordneten Motor (62, 63) drehbar ist.

3. Spannvorrichtung nach Anspruch 2, **dadurch gekennzeichnet, dass** der Motor (62, 63) einen innerhalb des Gehäuses (50, 51, 52) fest angeordneten Stator (63) und einen Rotor (62) zur Drehung der Spindelhülse (54) enthält.

4. Spannvorrichtung nach Anspruch 3, **dadurch gekennzeichnet, dass** der Rotor (62) auf einer innerhalb des Gehäuses (50, 51, 52) drehbar gelagerten Antriebsbuchse (59) angeordnet ist.

5. Spannvorrichtung nach Anspruch 4, dadurch gekennzeichet, dass die Antriebsbuchse (59) mehrere nach vorne vorstehende Übertragungsstifte (64) enthält, auf denen ein Übertragungsring (65) axial verschiebbar angeordnet ist.

6. Spannvorrichtung nach Anspruch 5, **dadurch gekennzeichnet, dass** in dem Übertragungsring (65) die Spindelhülse (54) verdrehfest angeordnet ist.

7. Spannvorrichtung nach Anspruch 5, **dadurch gekennzeichnet, dass** in dem Übertragungsring (65) ein hohler Kolben (66) angeordnet ist, der über ein Axiallager (67) an einer vorderen Stirnseite der Spindelhülse (54) drehbar abgestützt ist.

8. Spannvorrichtung nach einem der Ansprüche 1 bis 7, **dadurch gekennzeichnet, dass** die Gewindespindel (53) an einem hinteren Gehäuseteil (52) der Löseeinheit (49) angeordnet ist.

9. Spannvorrichtung nach Anspruch 1, **dadurch gekennzeichnet, dass** die Löseeinheit (17) eine schaltbare Kupplung (23, 24, 26, 27) enthält, durch welche die von dem Motor (5, 6) angetriebene Arbeitsspindel (4) mit dem Lineargetriebe (33, 34) verbindbar ist.

10. Spannvorrichtung nach Anspruch 9, **dadurch gekennzeichnet, dass** die schaltbare Kupplung (23, 24, 26, 27) einen drehfest angeordneten Spulenkörper (23) mit einer Spule (24) und ein innerhalb des Spulenkörpers (23) drehbar gelagertes Ankerteil (26) aufweist, das an seiner vorderen Stirnfläche einen Reibbelag (27) zum Eingriff mit einem Reibring (28) an der hinteren Stirnseite der Arbeitsspindel (4) enthält.

11. Spannvorrichtung nach Anspruch 10, **dadurch gekennzeichnet, dass** das Lineargetriebe (33, 34) eine mit dem Ankerteil (26) verdrehfest verbundene Spindelhülse (34) und eine gegen Verdrehung gesicherte Gewindespindel (33) enthält.

12. Spannvorrichtung nach Anspruch 11, **dadurch gekennzeichnet, dass** die Gewindespindel (33) über Stützrollen (37) gegen Verdrehung gesichert, jedoch axial beweglich auf Stützflächen (20) eines Gehäuseteils (19) der Löseeinheit (18) abgestützt ist.

13. Spannvorrichtung nach Anspruch 12, **dadurch gekennzeichnet, dass** in der Gewindespindel (33) ein Kolben (18) angeordnet ist, der über eine Hülse (38) mit der Gewindespindel (33) axial verschiebbar ist.

14. Spannvorrichtung nach Anspruch 13, **dadurch gekennzeichnet, dass** der Kolben (18) durch eine Feder (42) gegenüber der Hülse (42) axial vorgespannt ist.

## Claims

1. Clamping device for clamping a tool (8) or tool holder in a work spindle (4), in particular of a machine tool, with a draw rod (10) arranged displaceably inside the work spindle (4), a clamping assembly (12) arranged in the work spindle (4) and moveable by means of the draw rod (10) between a clamping position and a releasing position, a spring arrangement (14) associated with the draw rod (10) for generating the retraction force of the clamping assembly (12), and a releasing unit (17; 49) which can be actuated by an electrical drive (5, 6, 33, 34; 62, 63, 53, 54) and through which the clamping assembly (12) can be moved by means of the draw rod (10) against the force of the spring arrangement (14) into the releasing position, the electrical drive (5, 6, 33, 34; 62, 63, 53, 54) comprising a motor (5, 6; 62, 63) and a linear gear unit (33, 34; 53, 54) in the form of a threaded drive for converting the rotary movement of the motor into a linear movement for displacement of the draw rod (10), **characterised in that** the linear gear unit (33, 34; 53, 54) comprises a spindle sleeve (34, 54) which can be rotated by the motor (5, 6; 62, 63) and is coaxial with the draw rod (10), and an associated threaded spindle (33, 53).

2. Clamping device according to claim 1, **characterised in that** the spindle sleeve (54) can be rotated by a motor (62, 63) arranged inside a housing (50, 51, 52) of the releasing unit (49).

3. Clamping device according to claim 2, **characterised in that** the motor (62, 63) comprises a stator (63) which is arranged fixed inside the housing (50, 51, 52), and a rotor (62) for rotation of the spindle sleeve (54).

4. Clamping device according to claim 3, **characterised in that** the rotor (62) is arranged on a driving bush (59) mounted rotatably inside the housing (50, 51, 52).

5. Clamping device according to claim 4, **characterised in that** the driving bush (59) comprises a plurality of transmission pins (64) which protrude forwards and on which a transmission ring (65) is arranged so as to be displaceable axially.

6. Clamping device according to claim 5, **characterised in that** the spindle sleeve (54) is arranged so that it cannot turn in the transmission ring (65).

7. Clamping device according to claim 5, **characterised in that** arranged in the transmission ring (65) there is a hollow piston (66) which is supported rotatably by means of an axial bearing (67) on a front end of the spindle sleeve (54).

8. Clamping device according to one of claims 1 to 7, **characterised in that** the threaded spindle (53) is arranged on a rear housing part (52) of the releasing unit (49).

9. Clamping device according to claim 1, **characterised in that** the releasing unit (17) comprises a switchable coupling (23, 24, 26, 27) by means of which the work spindle (4) driven by the motor (5, 6) can be connected with the linear gear unit (33, 34).

10. Clamping device according to claim 9, **characterised in that** the switchable coupling (23, 24, 26, 27) exhibits a coil body (23) with a coil (24) arranged so that it cannot turn, and an armature part (26) which is mounted rotatably inside the coil body (23) and on its front end comprises a friction covering (27) for engagement with a friction ring (28) on the rear end of the work spindle (4).

11. Clamping device according to claim 10, **characterised in that** the linear gear unit (33, 34) comprises a spindle sleeve (34) which is connected to the armature part (26) so that it cannot turn, and a threaded spindle (33) which is secured so that it cannot turn.

12. Clamping device according to claim 11, **characterised in that** the threaded spindle (33) is secured by means of supporting rollers (37) so that it cannot turn, but is supported on supporting surfaces (22) of a housing part (19) of the releasing unit (18) so that it can move axially.

13. Clamping device according to claim 12, **characterised in that** arranged in the threaded spindle (33) there is a piston (18) which is displaceable axially by means of a sleeve (38) with the threaded spindle (33).

14. Clamping device according to claim 13, **characterised in that** the piston (18) is preloaded axially by a spring (42) against the sleeve (42).

## Revendications

1. Dispositif de serrage pour serrer un outil (8) ou un porte-outil dans une broche de travail (4), en particulier d'une machine-outil, avec un tirant (10) disposé à translation à l'intérieur de la broche de travail (4), avec un ensemble de serrage (12) disposé dans la broche de travail (4) et pouvant être déplacé au moyen du tirant (10) entre une position de serrage et une position de desserrage, avec un ensemble de ressort (14) associé au tirant (10) pour produire la force de blocage de l'ensemble de serrage (12), et avec une unité de desserrage (17 ; 49) pouvant être actionnée par un entraînement électrique (5, 6, 33, 34 ; 62, 63, 53, 54) et par laquelle l'ensemble de serrage (12) peut, au moyen du tirant (10), être déplacé dans la position de desserrage à l'encontre de la force de l'ensemble de ressort (14), sachant que l'entraînement électrique (5, 6, 33, 34 ; 62, 63, 53, 54) comprend un moteur (5, 6 ; 62, 63) et une transmission linéaire (33, 34 ; 53, 54) réalisée sous forme de transmission filetée pour transformer le mouvement de rotation du moteur en un mouvement linéaire pour le déplacement en translation du tirant (10), **caractérisé en ce que** la transmission linéaire (33, 34 ; 53, 54) comprend un manchon de broche (34, 54), coaxial au tirant (10) et pouvant être mis en rotation par le moteur (5, 6 ; 62, 63), et une broche filetée associée (33, 53).

2. Dispositif de serrage selon la revendication 1, **caractérisé en ce que** le manchon de broche (54) peut être mis en rotation par un moteur (62, 63) disposé à l'intérieur d'un boîtier (50, 51, 52) de l'unité de desserrage (49).

3. Dispositif de serrage selon la revendication 2, **caractérisé en ce que** le moteur (62, 63) comprend un stator (63), fixement disposé à l'intérieur du boîtier (50, 51, 52), et un rotor (62) pour la rotation du manchon de broche (54).

4. Dispositif de serrage selon la revendication 3, **caractérisé en ce que** le rotor (62) est disposé sur une douille d'entraînement (59) montée à rotation à l'intérieur du boîtier (50, 51, 52).

5. Dispositif de serrage selon la revendication 4, **caractérisé en ce que** la douille d'entraînement (59) comprend plusieurs broches de transmission (64) faisant saillie vers l'avant, sur lesquelles une bague de transmission (65) est montée à translation axiale.

6. Dispositif de serrage selon la revendication 5, **caractérisé en ce que** le manchon de broche (54) est monté en solidarité de rotation dans la bague de transmission (65).

7. Dispositif de serrage selon la revendication 5, **caractérisé en ce qu'**un piston creux (66) est disposé dans la bague de transmission (65), piston qui s'appuie à rotation contre un côté frontal avant du manchon de broche (54) au moyen d'un palier axial (67).

8. Dispositif de serrage selon l'une des revendications 1 à 7, **caractérisé en ce que** la broche filetée (53) est disposée sur une partie arrière de boîtier (52) de l'unité de desserrage (49).

9. Dispositif de serrage selon la revendication 1, **caractérisé en ce que** l'unité de desserrage (17) comprend un accouplement débrayable (23, 24, 26, 27) par lequel la broche de travail (4) entraînée par le moteur (5, 6) peut être reliée à la transmission linéaire (33, 34).

10. Dispositif de serrage selon la revendication 9, **caractérisé en ce que** l'accouplement débrayable (23, 24, 26, 27) présente un corps de bobine (23) bloqué en rotation et doté d'une bobine (24), et une partie d'induit (26) qui est montée à rotation à l'intérieur du corps de bobine (23) et qui contient sur sa face frontale avant une garniture de friction (27) destinée à engager une bague de friction (28) sur le côté frontal arrière de la broche de travail (4).

11. Dispositif de serrage selon la revendication 10, **caractérisé en ce que** la transmission linéaire (33, 34) comprend un manchon de broche (34) relié en solidarité de rotation à la partie d'induit (26), et une broche filetée (33) bloquée en rotation.

12. Dispositif de serrage selon la revendication 11, **caractérisé en ce que** la broche filetée (33) est, au moyen de galets de soutien (37), soutenue sur des surfaces de soutien (20) d'une partie de boîtier (19) de l'unité de desserrage (17) en étant bloquée en rotation, mais axialement mobile.

13. Dispositif de serrage selon la revendication 12, **caractérisé en ce qu'**un piston (18) est disposé dans la broche filetée (33), lequel est mobile en translation axiale avec la broche filetée (33) au moyen d'un manchon (38).

14. Dispositif de serrage selon la revendication 13, **caractérisé en ce que** le piston (18) est axialement précontraint par rapport au manchon (38) par un ressort (42).
